# FASCICULE DE BREVET EUROPEEN

(11) **EP 2 369 163 B1**
(45) Date de publication et mention de la délivrance du brevet: **21.01.2015**
(21) Numéro de dépôt: 11157660.9
(22) Date de dépôt: 10.03.2011
(51) Int. Cl.: F02K 1/00

(54) **Tuyère à col orientable**
Düse mit verstellbarem Hals
Nozzle with adjustable throat

(30) Priorité: 12.03.2010 FR 1000993
(43) Date de publication de la demande: 28.09.2011
(73) Titulaire: HERAKLES, 33185 Le Haillan (FR)
(72) Inventeur: Roussille, Clément, 33200 Bordeaux (FR); Lafont, André, 33160 St Medard en Jalles (FR); Soyris, Philippe, 33320 Eysines (FR); Lains, Dominique, 77170 Brie Comte Robert (FR); Hernandez, Didier, 77720 Quiers (FR)
(74) Mandataire: Desormiere, Pierre-Louis

(56) Documents cités:
- GB-A- 2 236 722
- US-A- 5 081 835
- US-A- 5 294 055

## Description

### Arrière plan de l'invention

La présente invention se rapporte aux aéronefs de type furtif, c'est-à-dire aux aéronefs de conception spécifique pour minimiser la signature équivalent radar (SER) et la signature infrarouge. Ce type d'aéronefs est, par exemple mais non exclusivement, celui des avions de combat sans pilote encore appelés drones ou UCAV (acronyme du terme anglais "Unmanned Combat Air Vehicle") et qui présentent, par souci de discrétion (SER principalement), des cellules de forme très plate et sans dérive verticale. En outre, la forme de l'aéronef ainsi que le besoin de discrétion infrarouge au niveau du jet sortant de la tuyère ont conduit à donner à cette dernière une forme dite "bidimensionnelle" ou "2D", la section de sortie de la tuyère étant, par exemple, de forme rectangulaire ou aplatie avec un rapport largeur/hauteur de l'ordre de 3 ou plus.

La suppression de la dérive verticale (gouverne de direction) nécessite de doter l'aéronef d'un autre moyen de contrôle en lacet. Les solutions actuellement les plus répandues consistent soit à utiliser des tuyères orientables, soit à doter les tuyères de volets mobiles. Même si ces solutions permettent de réaliser un pilotage de l'avion en lacet sans dérive verticale, elles impliquent toutefois la présence au moins partielle de pièces mobiles sur la structure externe de l'aéronef, ces pièces ayant alors une signature radar comparable à celle d'une gouverne de direction. En outre, les surfaces des pièces utilisées étant chaudes, ces dernières présentent également une visibilité infrarouge importante.

Par ailleurs, les systèmes de pilotage en lacet décrits ci-dessus ont généralement un impact sur les performances de poussée du moteur.

Les documents GB 2 236 722 et US 5 294 055 décrivent des tuyères à section bidimensionnelle, le document GB 2 236 722 divulguant en outre un col de tuyère mobile comprenant des parois latérales.

### Objet et description succincte de l'invention

La présente invention a pour but d'apporter une solution pour le pilotage en lacet d'aéronefs sans dérive verticale et équipés d'une tuyère bidimensionnelle, et ce sans augmentation notable de la signature radar et thermique de l'aéronef tout en assurant un contrôle fiable et aisé de la déviation de poussée.

Conformément à la présente invention, ce but est atteint grâce à une tuyère à section bidimensionnelle telle que définie dans la revendication 1.

La tuyère selon l'invention est ainsi équipée d'un col mobile qui permet de dévier ou "vectoriser" la poussée du moteur et de réaliser un pilotage en lacet aussi efficace que celui réalisé avec une dérive verticale.

Le col mobile de la tuyère étant disposé à l'intérieur du bâti fixe de cette dernière en amont du divergent, la tuyère selon l'invention ne dégrade pas la signature radar par rapport à une tuyère fixe car l'extrémité aval de la tuyère reste immobile tandis que les éléments mobiles (pièces du col) sont masqués dans le bâti de la tuyère.

En outre, le col mobile étant réalisé avec deux longerons montés coulissants sur deux parois latérales pivotantes, la géométrie de la section du col reste constante (en dimensions et en forme) quel que soit l'angle de braquage imposé au col. Cela permet un découplage entre le pilotage de l'aéronef en lacet et la régulation du moteur, le col de l'invention n'ayant alors pas d'impact sur le cycle de fonctionnement du moteur.

Cette conservation de forme et de dimensions de la section du col lors du braquage ou pivotement de ce dernier permet également de conserver le vecteur poussée perpendiculaire au col géométrique et d'assurer ainsi un rendement identique à celui d'une tuyère fixe.

Selon un aspect de l'invention, chaque paroi latérale comprend au moins des premier et second panneaux reliés entre eux par un axe de rotation mobile, les longerons étant montés sur les premiers panneaux, chaque premier panneau étant fixé à son extrémité aval à un axe de rotation solidaire du bâti.

Selon un autre aspect de l'invention, l'extrémité libre de chaque second panneau est montée de façon coulissante le long du bord latéral du bâti.

Selon un premier mode de réalisation de l'invention, au moins un actionneur linéaire est disposé entre une extrémité d'un des longerons et un axe de rotation solidaire du bâti auquel est fixé un des premiers panneaux.

Selon encore un autre mode de réalisation de l'invention, chaque premier panneau comporte au moins un bras s'étendant à l'extérieur du col, chaque bras étant relié aux longerons par un axe de rotation mobile, un actionneur pouvant être relié à l'axe de rotation mobile pour commander le mouvement du col.

Selon un aspect de l'invention, les longerons présentent, dans le sens longitudinal, une forme rectiligne de manière à former une section de col de forme rectangulaire.

Selon un autre aspect de l'invention, au moins un des deux longerons présente, dans le sens longitudinal, une forme courbée de manière à former une section de col de forme non rectangulaire.

L'invention a également pour objet un aéronef équipé d'une tuyère selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue très schématique d'un aéronef équipé d'une tuyère à col mobile conformément à un mode de réalisation de l'invention,
- la figure 2 est une vue en perspective d'une tuyère à col mobile conformément à un mode de réalisation de l'invention,
- la figure 3 est une vue éclatée d'une partie de la tuyère de la figure 2,
- les figures 4 et 5 sont des vues du col de la figure 2 dans des positions de braquage différentes,
- les figures 6A à 6E illustrent un exemple de cinématique du col de la figure 2 suivant plusieurs angles d'orientation,
- la figure 7 est une vue en perspective d'une tuyère à col mobile conformément à un autre mode de réalisation de l'invention,

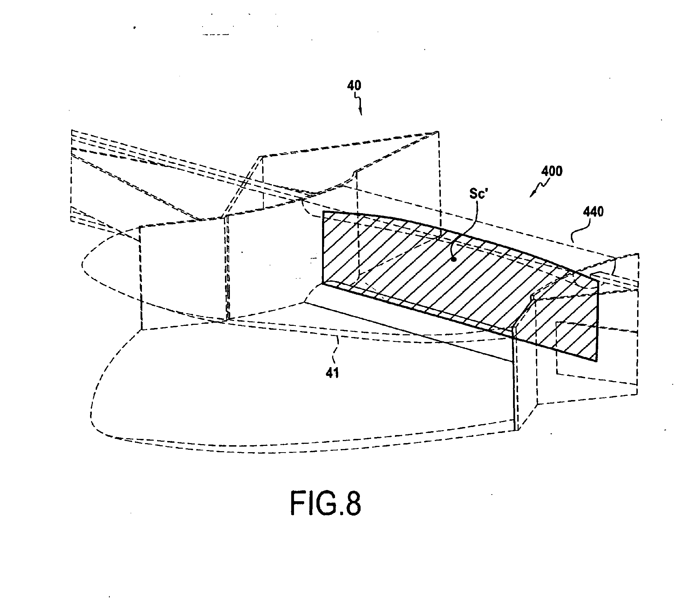

- la figure 8 est une vue en perspective montrant une variante de forme du col mobile d'une tuyère selon l'invention.

### Description détaillée des modes de réalisation de l'invention

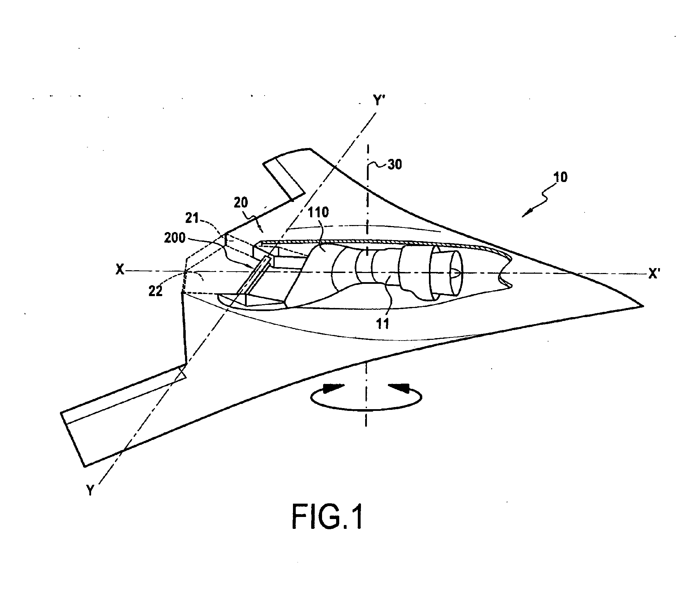

La figure 1 illustre très schématiquement un aéronef 10 de type avion de combat sans pilote, encore appelé drone ou UCAV, qui est équipé d'un moteur 11 dont l'arrière-corps 110 se termine par une tuyère supersonique 20 comprenant un bâti fixe 21 se terminant par un divergent 22. La tuyère 20 présente une forme "bidimensionnelle", c'est-à-dire qu'elle présente une section rectangulaire ou une forme aplatie avec, au niveau de sa section de sortie, un rapport largeur/hauteur qui peut être, par exemple, de l'ordre de 3 ou plus.

Pour conserver une forme de cellule très plate, l'aéronef 10 ne comporte pas de dérive verticale. Conformément à l'invention, le pilotage en lacet de l'aéronef 10 est réalisé grâce à un col mobile 200 qui est placé à l'intérieur du bâti fixe 21 de la tuyère 20 en amont du divergent 22. Comme expliqué ci-après en détail, le col 200 est mobile de manière à dévier l'écoulement des gaz issus du moteur 11 et réaliser une vectorisation de la poussée du moteur afin de permettre un pilotage de l'aéronef autour de son axe de lacet 30.

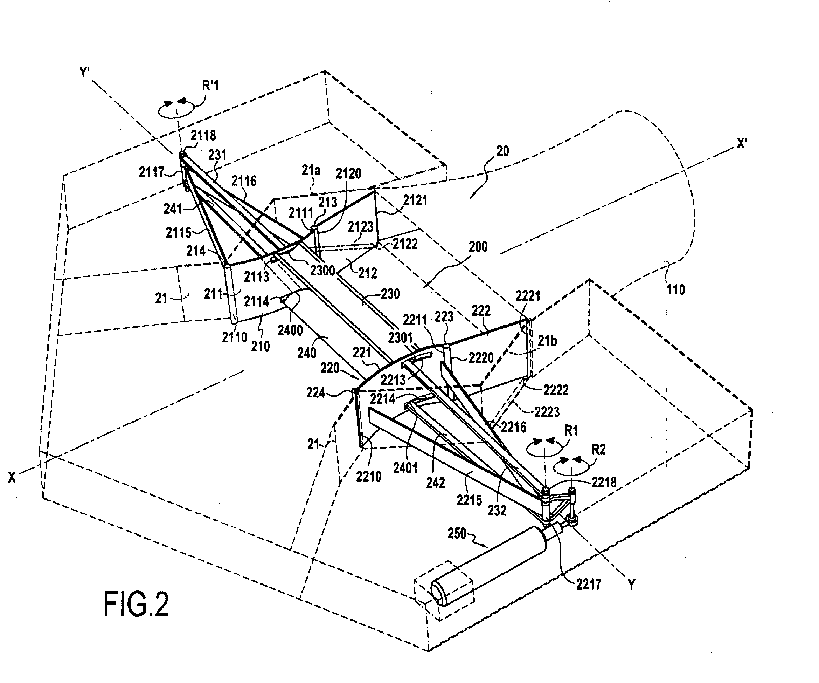

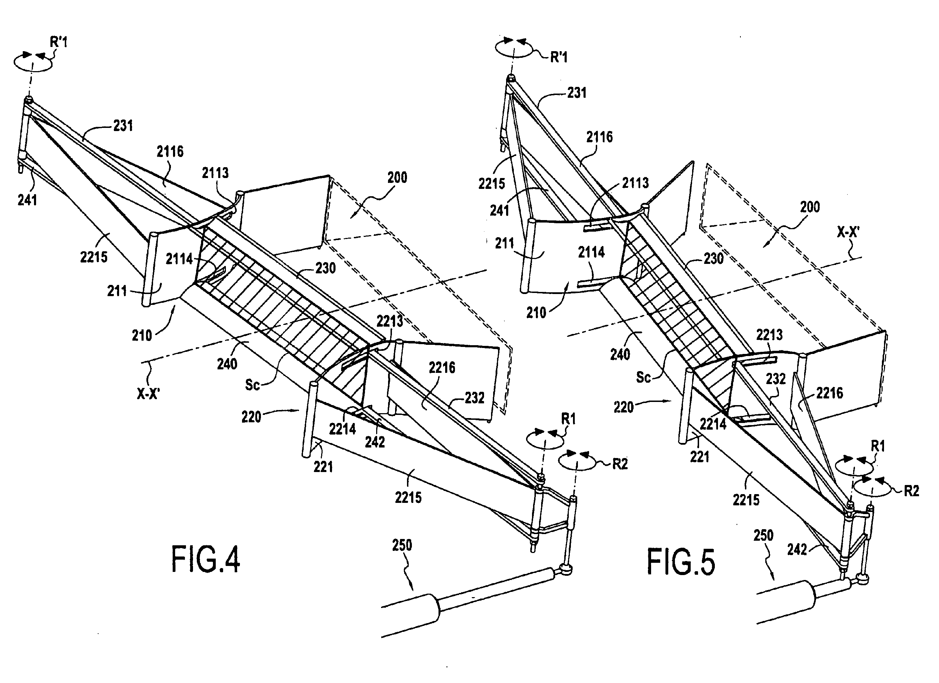

Comme représenté sur la figure 2, le col mobile 200 est formé de deux parois latérales 210 et 220 disposées de chaque côté du bâti fixe 21 et de deux longerons 230 et 240 qui s'étendent transversalement entre les deux parois latérales 210 et 220. L'espace délimité par ces quatre éléments forme la section de col Sc de la tuyère (voir figures 4 et 5). Chaque paroi latérale 210, respectivement 220, comprend des premiers et second panneaux 211 et 212, respectivement 221 et 222. L'extrémité amont 2111 du premier panneau 210 est reliée à l'extrémité aval 2120 du second panneau 212 par un axe de rotation mobile 213, c'est-à-dire un axe qui n'est pas solidaire du bâti 21. De même, l'extrémité amont 2211 de l'autre premier panneau 221 est reliée à l'extrémité aval 2220 du second panneau 222 par un axe de rotation mobile 223.

L'extrémité aval 2110 du premier panneau 211 est fixée à un axe de rotation 214 solidaire du bâti fixe 21. De même, l'extrémité aval 2210 de l'autre premier panneau 221 est fixée à un axe de rotation 224 solidaire du bâti 21. Les premiers panneaux 211 et 221 sont, par conséquent, aptes à pivoter autour de leurs axes de rotation respectifs 214 et 224.

L'extrémité amont 2121, respectivement 2221, du deuxième panneau 212, respectivement 222, est mobile par rapport au bord latéral 21a, respectivement 21b, du bâti 21. Afin de permettre une bonne canalisation des gaz d'écoulement dans l'espace de la section de col, l'extrémité amont de chaque second panneau 212, respectivement 222, peut être munie d'un guide 2122, respectivement 2222. Des glissières 2123, respectivement 2223, sont alors ménagées dans les parties inférieures et supérieures du bâti 21 respectivement le long des bords latéraux 21a et 21b (seules les glissières ménagées dans la partie inférieure du bâti sont représentées sur la figure 2) de manière à permettre un déplacement relatif de l'extrémité amont des seconds panneaux 212 et 222 par rapport aux bords latéraux du bâti, et ce au plus près de ces derniers.

Les longerons transversaux 230 et 240 sont montés de façon coulissante sur les premiers panneaux 211 et 221 des parois latérales 210 et 220. Plus précisément, sur la figure 2, les extrémités 2300 et 2301 du longeron 230 sont prolongées à l'extérieur de la section de col respectivement par des leviers 231 et 232. De la même façon, les extrémités 2400 et 2401 du longeron 240 sont prolongées à l'extérieur de la section de col respectivement par des leviers 241 et 242.

Le levier 231, respectivement 232, traverse le premier panneau 211, respectivement 221, à travers une lumière 2113, respectivement 2213, ménagée dans une partie supérieure dudit premier panneau. De même, le levier 241, respectivement 242, traverse le premier panneau 211, respectivement 221, à travers une lumière 2114, respectivement 2214, ménagée dans une partie inférieure dudit premier panneau. Ainsi, les longerons 230 et 240 sont aptes à coulisser le long des premiers panneaux 211 et 221 lors du pivotement de ces derniers.

Dans le mode de réalisation présenté sur la figure 2, le pivotement des premiers panneaux 211 et 221 et, par conséquent, le déplacement des longerons 230 et 240, est commandé par un vérin 250 qui est relié au premier panneau 221 via deux bras 2215 et 2216.

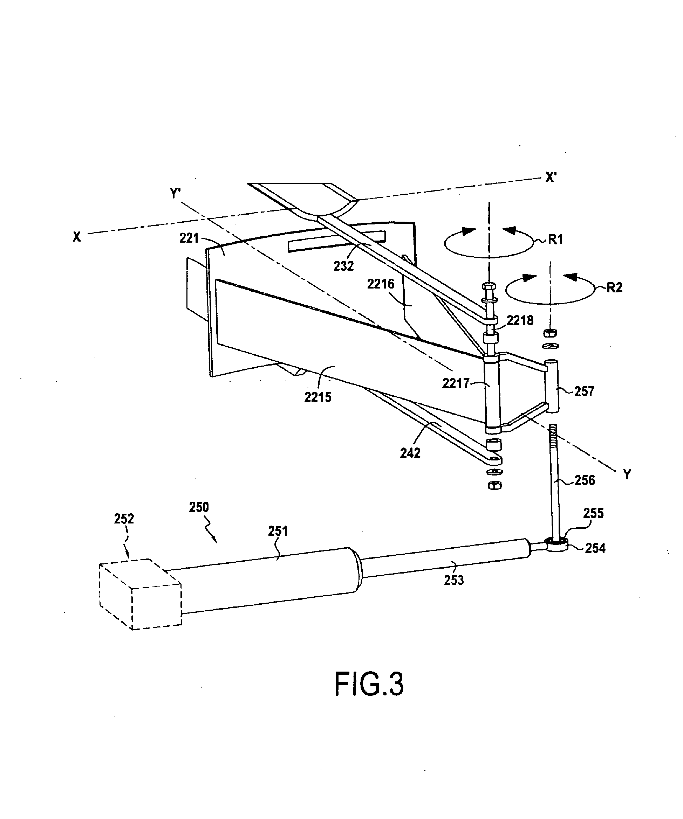

Plus précisément, comme illustré sur la figure 3, au voisinage du vérin 250, les bras 2215 et 2216 sont reliés l'un à l'autre par un élément tubulaire 2217 dans lequel un élément 2218 formant un axe de rotation R1 est introduit, l'élément 2218 correspondant ici à une vis. Les leviers 232 et 242 respectivement des longerons 230 et 240 sont également solidaires de l'axe de rotation R1. Le vérin 250 comprend un piston 251 qui est fixé à la structure de l'aéronef par une base 252. Le piston 251 actionne une tige de commande 253 munie d'un siège de rotule 254 à son extrémité libre et dans lequel repose une rotule 255 prolongée par une vis 256 formant un axe de rotation R2. Les axes de rotation R1 et R2, à savoir les vis 2218 et 256, sont reliés l'un à l'autre au moyen d'une chape 257.

Le premier panneau 211 comporte également deux bras 2115 et 2116 reliés l'un à l'autre par un élément tubulaire 2117 dans lequel un élément 2118 formant un axe de rotation R'1, telle qu'une vis, est introduit, les leviers 231 et 241 respectivement des longerons 230 et 240 étant aussi solidaires de l'axe de rotation.

Des ouvertures (non représentées sur la figure 2) sont ménagées pour permettre le passage des bras et des leviers.

Lors de l'actionnement du vérin 250, celui-ci exerce une force de traction ou de poussée via sa tige de commande 253 suivant la commande envoyé au vérin. Le mouvement de la tige de commande est transmis au premier panneau 221 via la chape 257 et les bras 2215 et 2216. Ce même mouvement est en outre transmis aux longerons 230 et 240 via les leviers 232 et 242 reliés à la chape 257. Les longerons 230 et 240 transmettent alors le mouvement au premier panneau 211 qui pivote de façon symétrique par rapport au premier panneau 221 par glissement relatif des extrémités 2300 et 2400 des longerons 230 et 240 sur la face interne du premier panneau 211. Le mécanisme suiveur constitué par les leviers 231, 241 et les bras 2115, 2116 permet d'assurer une stabilité dans le déplacement du premier panneau 211.

Le col 200 peut être ainsi orienté par rapport à l'axe XX' de la tuyère suivant des positions comprises entre deux inclinaisons maximales déterminées illustrées sur les figures 4 et 5. Le contrôle des deux inclinaisons maximales peut être réalisé en asservissant la course du vérin 250 entre ces deux inclinaisons. Les lumières 2113, 2114, 2213 et 2214 ménagées sur les premiers panneaux 211 et 221 peuvent également être dimensionnées pour former des butées pour les leviers des longerons dans les deux inclinaisons maximales.

On constate que, grâce au montage coulissant des longerons sur les premiers panneaux des parois latérales, les longerons s'orientent automatiquement en fonction du pivotement des premiers panneaux, ce qui permet de maintenir une section de col Sc constante en dimensions et en forme quelle que soit l'orientation donnée à ce dernier.

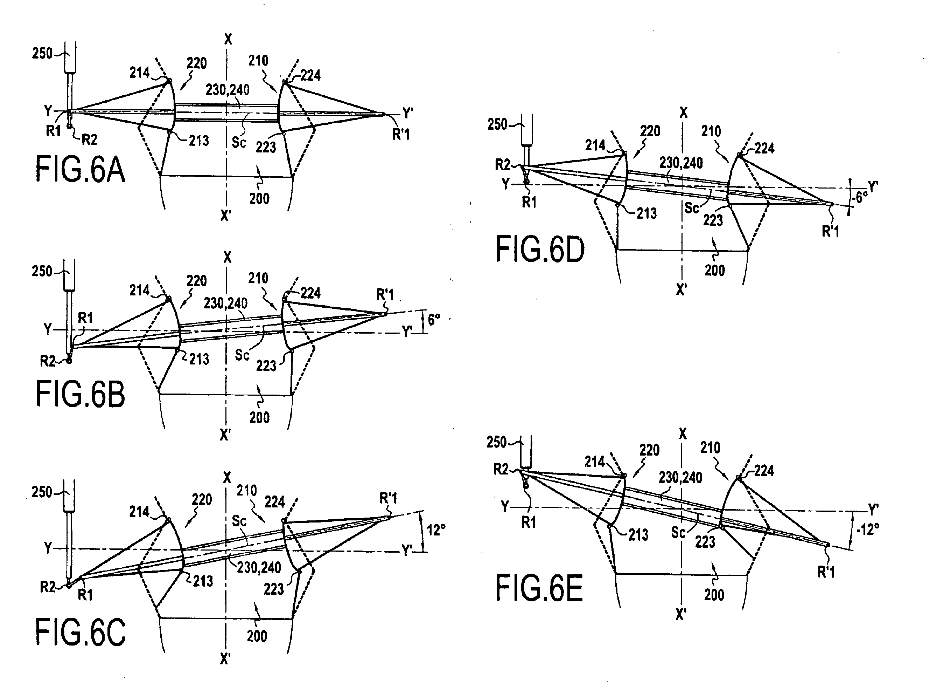

Les figures 6A à 6E montrent l'orientation du col 200 suivant six angles de vectorisation différents ayant respectivement comme valeur 0°, 6°, 12°, -6° et -12°. L'angle de vectorisation est ici mesuré par rapport à l'axe de référence YY' qui est perpendiculaire à l'axe XX' de la tuyère.

La poussée produite par le moteur peut être ainsi vectorisée suivant différents angles afin de permettre un pilotage en lacet de l'aéronef. Suivant l'angle de vectorisation appliqué, les deuxièmes panneaux 212 et 222 respectivement des parois latérales 210 et 220 s'inclinent dans différentes positions pour permettre au col 200 de pivoter tout en canalisant l'écoulement vers la section de col.

Comme illustré sur les figures 6A à 6E, l'orientation du col 200, ou plus précisément l'orientation du plan de la section du col Sc par rapport à l'axe YY', est réalisé par le déplacement des centres de rotation mobiles R1 et R'1 suivant un arc de cercle.

Dans le mode de réalisation décrit ci-dessus le placement relatif des longerons transversaux par rapport aux parois latérales est réalisé par coulissement des leviers des longerons dans les lumières ménagées dans les premiers panneaux des parois latérales. Toutefois, d'autres mécanismes peuvent être envisagés pour permettre le coulissement des extrémités des longerons sur la surface interne des premiers panneaux. A titre d'exemple, les extrémités des longerons peuvent être munies de guides engagés dans des rails ou glissières présents sur les premiers panneaux des parois latérales comme décrit ci-après.

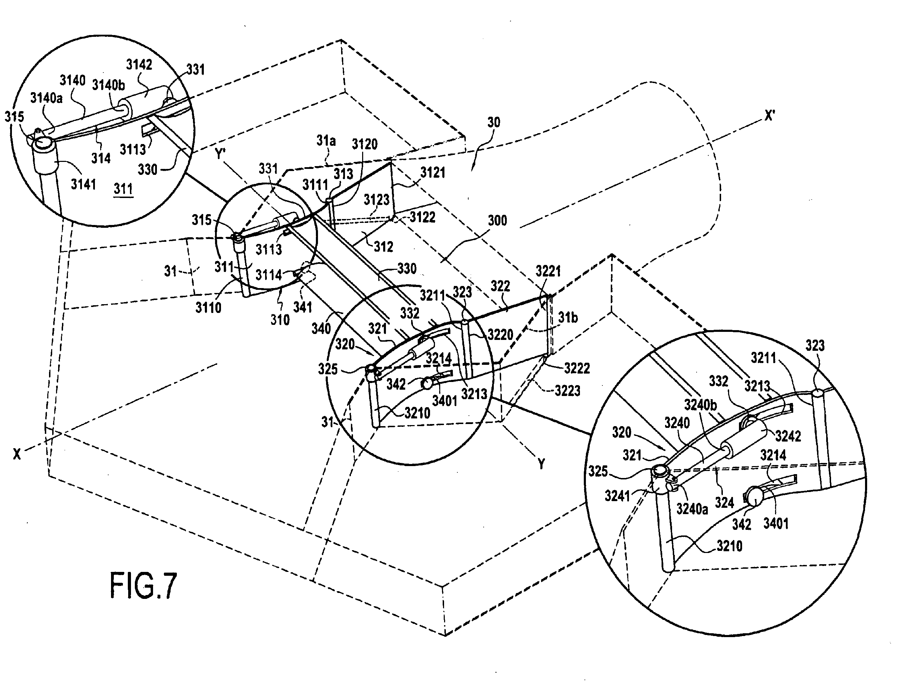

La figure 7 illustre un autre mode de réalisation d'une tuyère 30 selon l'invention qui diffère de la tuyère 20 décrite précédemment en ce qu'elle comprend un col mobile 300 dont le positionnement est assuré directement par un ou plusieurs actionneurs linéaires fixés entre les axes de rotation solidaires du bâti des premiers panneaux des parois latérales et les extrémités des longerons et non par des moyens d'actionnement déportés comme dans la tuyère 20.

Plus précisément, le col mobile 300 de la figure 7 est formé, comme le col mobile 200, de deux parois latérales 310 et 320 disposées de chaque côté du bâti fixe 31 et comprenant chacune des premiers et second panneaux 311 et 312, respectivement 321 et 322 ainsi que de deux longerons 330 et 340 qui s'étendent transversalement entre les deux parois latérales 310 et 320.

L'extrémité amont 3111 du premier panneau 310 est reliée à l'extrémité aval 3120 du second panneau 312 par un axe de rotation mobile 313. De même, l'extrémité amont 3211 de l'autre premier panneau 321 est reliée à l'extrémité aval 3220 du second panneau 322 par un axe de rotation mobile 323.

L'extrémité amont 3121, respectivement 3221, du deuxième panneau 312, respectivement 322, est mobile par rapport au bord latéral 31a, respectivement 31b, du bâti 21, l'extrémité amont du second panneau 312, respectivement 322, pouvant être munie d'un guide 3122, respectivement 3222 se déplaçant dans des glissières 3123, respectivement 3223 (seules les glissières ménagées dans la partie inférieure du bâti sont représentées sur la figure 7).

Les longerons transversaux 330 et 340 sont montés de façon coulissante sur les premiers panneaux 211 et 221 des parois latérales 310 et 320 grâce à des guides 331, 332, 341, 342 engagés chacun respectivement dans des lumières 3113, 3213, 3114, 3214 présentes sur les premiers panneaux des parois latérales.

L'extrémité aval 3110 du premier panneau 311 est fixée à un axe de rotation 315 solidaire du bâti fixe 31. De même, l'extrémité aval 3210 de l'autre premier panneau 321 est fixée à un axe de rotation 325 solidaire du bâti 31.

Dans ce mode de réalisation, un premier actionneur linéaire 314 est disposé entre l'axe de rotation 315 et le guide 331 du longeron 330. Dans le mode réalisation présenté ici, l'actionneur 314 comprend une tige 3140 dont une extrémité 3140a est fixée à l'axe de rotation 315 via une liaison pivotante 3141, l'extrémité opposée 3140b coulisse dans un vérin 3142 solidaire du guide 332 du longeron 330. De même, le deuxième actionneur 324 comprend une tige 3240 dont une extrémité 3240a est fixée à l'axe de rotation 325 via une liaison pivotante 3241, l'extrémité opposée 3240b coulisse dans un vérin 3242 solidaire du guide 332 du longeron 330. D'autres types d'actionneurs linéaires, tels qu'un système du type vis sans fin, peuvent être aussi utilisés.

Les actionneurs 314 et 324 permettent de faire pivoter les premiers panneaux 311 et 321 autour des axes de 315 et 325, les longerons 330 et 340 coulissant le long desdits premiers panneaux.

En dépit de l'absence de bras reliant les premiers panneaux à un axe de rotation mobile comme dans la tuyère 20 décrite précédemment, les éléments du col mobile 300, à savoir les parois latérales 310 et 320 (comprenant les premiers et second panneaux 311 et 312, respectivement 321 et 322) et les longerons 330 et 340, se déplacent suivant une cinématique identique à celle décrite pour le col mobile 200. En particulier, en contrôlant le positionnement des actionneurs 314 et 324, les différentes positions du col mobile 200 illustrées aux figures 6A à 6E peuvent également être obtenues avec le col mobile 300. L'orientation du col mobile 300 peut être définie et mesurée par rapport à deux centres de rotation mobiles géométriques correspondant aux centres de rotations mobiles R1 et R'1 du col mobile 200.

En outre, les éléments du col mobile présentent entre eux un degré d'hyperstaticité suffisant pour assurer le maintien en place de celui-ci, et ce après chaque positionnement du col par le ou les actionneurs. Le degré d'hyperstaticité est en particulier obtenu par les frottements existants entre les longerons transversaux 330 et 340 et les panneaux 311 et 321.

En outre, les gaz issus du moteur sont en équipression au niveau du col et ne créent pas, par conséquent, un couple sur une partie du col par rapport à une autre qui serait susceptible de modifier la position du col.

Le col mobile 300 peut ne comprendre qu'un seul des deux actionneurs 314 et 324. Pour des raisons de fiabilité, il comprend de préférence les deux actionneurs 314 et 324. Dans ce cas, les actionneurs fonctionnent de manière synchronisée, c'est-à-dire quand l'un des actionneurs pousse l'autre tire et inversement.

La structure du col mobile 300 permet d'optimiser l'encombrement dans le bâti et d'éviter d'avoir des pièces qui traversent celui-ci.

Suivant une variante de réalisation les actionneurs 314 et 324 peuvent être remplacés par des actionneurs rotatifs directement en prise avec les axes de rotations 315 et 325 respectivement.

Suivant une autre variante de réalisation, les parois latérales du col mobile selon l'invention peuvent comprendre un panneau supplémentaire monté de façon articulé, c'est-à-dire via des axes de rotation mobiles, entre les premier et deuxième panneaux décrits précédemment. Des telles parois latérales à trois panneaux permettent de réduire la valeur des angles présents dans le chemin d'écoulement formé par le col mobile.

Dans les modes réalisation décrits ci-dessus, les longerons 230, 240, 330, 340 présentent dans le sens longitudinal une forme rectiligne de sorte qu'ils définissent avec les premiers panneaux 211 et 220 une section de col de forme rectangulaire adaptée à la forme de la tuyère qui est ici elle aussi rectangulaire.

Toutefois, dans certain cas, comme par exemple dans le cas d'une optimisation de la surface équivalente radar (en anglais RCS pour "Radar Cross Section"), il peut être avantageux d'avoir une tuyère qui présente une forme non rectangulaire. La figure 7 illustre une tuyère 40 de forme bidimensionnelle dont la section de sortie présente dans sa partie supérieure 41 une forme courbée et, par conséquent, non rectangulaire. Afin de suivre la forme non rectangulaire de la tuyère et ne pas perturber le fonctionnement du moteur, la tuyère peut être équipée d'un col mobile 400 dont le longeron supérieur 440 présente une forme courbée similaire à celle de la partie supérieure 41 de la tuyère. Le col 400 présente ainsi une section de col Sc' de forme non rectangulaire.

Le longeron inférieur peut également présenter une forme courbée. En outre, les premiers panneaux formant les parois latérales du col de tuyère mobile de l'invention peuvent également présenter une forme courbée.

Les éléments constituant le col mobile selon l'invention sont tous intégrés à l'intérieur du bâti fixe de sorte qu'aucune pièce mobile n'est présente à l'extérieur de l'aéronef, minimisant ainsi la signature radar et thermique de l'aéronef par rapport aux tuyères mobiles ou à volets.

Les éléments constitutifs du col selon l'invention, à savoir au moins les parois latérales et les longerons peuvent être réalisés en métal ou en matériau composite thermostructural (ex. carbone/carbone (C/C), carbone/carbure de silicium (C/SiC), ou carbure de silicium/carbure de silicium (SiC/SiC)).

Le col mobile de l'invention n'est pas limité à l'aéronef décrit ci-dessus. Il peut être utilisé d'une manière générale dans tout type d'aéronef équipé d'une tuyère présentant une forme bidimensionnelle et pour lequel il est recherché une solution plus discrète que la dérive verticale pour le pilotage en lacet.

## Revendications

1. Tuyère à section bidimensionnelle (20), ladite tuyère comprenant un bâti fixe (21) comportant un divergent (22) dans sa partie aval et
un col mobile (200) disposé à l'intérieur du bâti fixe (21) en amont du divergent (22) ledit col étant formé de deux parois latérales (210, 220), **caractérisée en ce qu'**elle comprend en outre deux longerons transversaux (230, 240) qui s'étendent transversalement entre les deux parois latérales (210, 220) et **en ce que** les deux parois latérales (210, 220) sont montées de façon pivotante dans ledit bâti (21), lesdites parois étant reliées entre elles par les deux longerons transversaux (230, 240), chaque extrémité des longerons étant montée de façon coulissante sur la face interne des parois correspondantes (210; 220).

2. Tuyère selon la revendication 1, **caractérisée en ce que** chaque paroi latérale (210; 220) comprend au moins des premier et second panneaux (211, 212; 221, 222) reliés entre eux par un axe de rotation mobile (231, 223), les longerons (230, 240) étant montés sur les premiers panneaux (211, 221), chaque premier panneau (211; 221) étant fixé à son extrémité aval (2110; 2210) à un axe de rotation solidaire du bâti (214, 224).

3. Tuyère selon la revendication 2, **caractérisée en ce que** l'extrémité libre (2121; 2221) de chaque second panneau (212; 222) est montée de façon coulissante le long du bord latéral (21a; 21b) du bâti (21).

4. Tuyère selon la revendication 2 ou 3, **caractérisée en ce qu'**elle comprend au moins un actionneur linéaire (314) disposé entre une extrémité (332) d'un des longerons (330) et un axe de rotation (325) solidaire du bâti (31) auquel est fixé un des premiers panneaux (321).

5. Tuyère selon la revendication 2 ou 3, **caractérisée en ce que** chaque premier panneau (211; 221) comporte au moins un bras (2115; 2215) s'étendant à l'extérieur du col, chaque bras étant relié aux longerons (230, 240) par un axe de rotation mobile (2118; 2218).

6. Tuyère selon la revendication 5, **caractérisée en ce qu'**elle comprend en outre un actionneur (250) relié à l'axe de rotation mobile (2118; 2218).

7. Tuyère selon l'une quelconque des revendications 1 à 6, **caractérisée en ce que** les longerons (230, 240) présentent, dans le sens longitudinal, une forme rectiligne de manière à former une section de col de forme rectangulaire.

8. Tuyère selon l'une quelconque des revendications 1 à 6, **caractérisé en ce qu'**au moins un des longerons (440) présente, dans le sens longitudinal, une forme courbée de manière à former une section de col de forme non rectangulaire.

9. Aéronef **caractérisé en ce qu'**il comprend une tuyère selon l'une quelconque des revendications 1 à 8.

## Patentansprüche

1. Düse mit zweidimensionalem Querschnitt (20), wobei die Düse einen festen Rahmen (21) mit einem divergenten Teil (22) in seinem stromabwärtigen Teil und einen beweglichen Hals (200), der innerhalb des festen Rahmens (21) vor dem divergenten Teil (22) angeordnet ist, umfasst, wobei der Hals von zwei Seitenwänden (210, 220) gebildet ist,
**dadurch gekennzeichnet, dass** sie ferner zwei Querholme (230, 240) umfasst, die zwischen den beiden Seitenwänden (210, 220) quer verlaufen, und dass die beiden Seitenwände (210, 220) in dem Rahmen (21) schwenkbar angebracht sind, wobei die Wände durch die beiden Querholme (230, 240) untereinander verbunden sind, wobei jedes Ende der Holme an der Innenseite der entsprechenden Wände (210; 220) verschieblich angebracht ist.

2. Düse nach Anspruch 1, **dadurch gekennzeichnet, dass** jede Seitenwand (210; 220) wenigstens ein erstes und ein zweites Paneel (211; 212; 221, 222), welche durch eine bewegliche Rotationsachse (231, 223) untereinander verbunden sind, umfasst, wobei die Holme (230, 240) an den ersten Paneelen (211, 221) angebracht sind, wobei jedes erste Paneel (211; 221) an seinem stromabwärtigen Ende (2110; 2210) an einer mit dem Rahmen (214, 224) fest verbundenen Rotationsachse befestigt ist.

3. Düse nach Anspruch 2, **dadurch gekennzeichnet, dass** das freie Ende (2121; 2221) eines jeden zweiten Paneels (212; 222) entlang des Seitenrandes (21 a; 21 b) des Rahmens (21) verschieblich angebracht ist.

4. Düse nach Anspruch 2 oder 3, **dadurch gekennzeichnet, dass** sie wenigstens ein Linearstellglied (314) umfasst, das zwischen einem Ende (332) von einem der Holme (330) und einer mit dem Rahmen (31) fest verbundenen Rotationsachse (325), an der eines der ersten Paneele (321) befestigt ist, angeordnet ist.

5. Düse nach Anspruch 2 oder 3, **dadurch gekennzeichnet, dass** jedes erste Paneel (211; 221) wenigstens einen Arm (2115; 2215), der außerhalb des Halses verläuft, umfasst, wobei jeder Arm durch eine bewegliche Rotationsachse (2118; 2218) mit den Holmen (230, 240) verbunden ist.

6. Düse nach Anspruch 5, **dadurch gekennzeichnet, dass** sie ferner einen mit der beweglichen Rotationsachse (2118; 2218) verbundenen Aktor (250) umfasst.

7. Düse nach einem der Ansprüche 1 bis 6, **dadurch gekennzeichnet, dass** die Holme (230, 240) in Längsrichtung eine geradlinige Form aufweisen, so dass ein rechteckförmiger Halsquerschnitt gebildet wird.

8. Düse nach einem der Ansprüche 1 bis 6, **dadurch gekennzeichnet, dass** wenigstens einer der Holme (440) in Längsrichtung eine gekrümmte Form aufweist, so dass ein nicht rechteckförmiger Halsquerschnitt gebildet wird.

9. Luftfahrzeug, **dadurch gekennzeichnet, dass** es eine Düse nach einem der Ansprüche 1 bis 8 umfasst.

## Claims

1. A nozzle (20) of two-dimensional section, said nozzle comprising a stationary structure (21) including a downstream diverging portion (22); and a throat (200) located inside the stationary structure (21) upstream from the diverging portion (22), said throat including two side walls (210, 220), **characterized in that** said nozzle further comprises two transverse length members (230, 240) extending crosswise between the two side walls (210, 220) and **in that** the two side walls (210, 220) are pivotally mounted in said structure (21), said walls being connected together by the two transverse length members (230, 240), each length member being slidably mounted on each of the walls (210; 220).

2. A nozzle according to claim 1, **characterized in that** each side wall (210; 220) comprises at least first and second panels (211, 212; 221, 222) connected together by a movable pivot pin (231, 223), the length members (230, 240) being mounted on the first panels (211, 221), each first panel (211; 221) being fastened at its downstream end (2110; 2210) to a pivot pin (214, 224) secured to the structure.

3. A nozzle according to claim 2, **characterized in that** the free end (2121; 2221) of each second panel (212; 222) is slidably mounted to slide along the side edge (21a; 21b) of the structure (21).

4. A nozzle according to claim 2 or claim 3, **characterized in that** it includes at least one linear actuator (314) disposed between one end (332) of one of the length members (330) and a pivot pin (325) secured to the structure (31) to which one of the first panels (321) is fastened.

5. A nozzle according to claim 2 or claim 3, **characterized in that** each first panel (211; 221) includes at least one arm (2115; 2215) extending outside the throat, each arm being connected to the length members (230, 240) by respective movable pivot pins (2118; 2218).

6. A nozzle according to claim 5, **characterized in that** it further includes an actuator (250) connected to the movable pivot pin (2118; 2218).

7. A nozzle according to any one of claims 1 to 6, **characterized in that** the length members (230, 240) present a shape that is rectilinear in the longitudinal direction so as to form a throat section that is rectangular in shape.

8. A nozzle according to any one of claims 1 to 6, **characterized in that** at least one of the length members (440) presents a shape in the longitudinal direction that is curved so as to form a throat section of a shape that is not rectangular.

9. An aircraft **characterized in that** it includes a nozzle according to any one of claims 1 to 8.
